# FASCICULE DE BREVET EUROPEEN

(11) **EP 0 817 923 B1**
(45) Date de publication et mention de la délivrance du brevet: **29.08.2001**
(21) Numéro de dépôt: 96909198.2
(22) Date de dépôt: 26.03.1996
(51) Int. Cl.: F16D 1/09, F16B 3/06, F16D 1/08

(54) **MOYEU AMOVIBLE POUR LE MONTAGE D'UN ORGANE TOURNANT SUR UN ARBRE D'ENTRAINEMENT, ET ORGANE TOURNANT EQUIPE D'UN TEL MOYEU AMOVIBLE**
LÖSBARE NABE FÜR DIE MONTAGE EINES DREHENDEN TEILS AUF EINER ANTRIEBSWELLE UND MIT EINER LÖSBAREN NABE DIESER ART VERSEHENDES DREHENDES TEIL
DETACHABLE HUB FOR MOUNTING A ROTATING UNIT ON A DRIVE SHAFT AND ROTATING UNIT WITH SUCH A DETACHABLE HUB

(30) Priorité: 27.03.1995 FR 9503540; 31.05.1995 FR 9506441
(43) Date de publication de la demande: 14.01.1998
(73) Titulaire: COLMANT CUVELIER SOCIETE DITE :, F-59000 Lille (FR)
(72) Inventeur: BACLE, Gilles, F-59280 Armentières (FR); SALMON, Patrick, F-62840 Laventie (FR); GAUDRE, Alain, F-59700 Marcq-en-Bar ul (FR)
(74) Mandataire: Hud, Robert
(86) Numéro de dépôt international: FR9600446
(87) Numéro de publication internationale: WO9630664

(56) Documents cités:
- EP-A- 0 318 977
- DE-A- 2 027 871
- DE-B- 1 203 054
- DE-B- 1 265 506
- FR-A- 2 016 168
- FR-A- 2 025 761
- FR-A- 2 490 753
- US-A- 2 402 743
- US-A- 2 509 711

## Description

La présente invention concerne le montage d'un organe tournant, tel qu'une poulie, un accouplement ou un pignon, par exemple, sur un arbre par l'intermédiaire d'un moyeu amovible utilisé pour ce montage.

On connait des moyeux amovibles constitués par un élément tronconique fendu radialement qui présente un alésage intérieur axial permettant son engagement sur l'arbre d'entraînement et une paroi extérieure conique, un ensemble de vis placées sur la périphérie du moyeu permettant de fixer celui-ci sur l'organe tournant. On citera à titre d'exemples de tels moyeux amovibles ceux commercialisés sous la marque VECOBLOC (marque déposée).

Une clavette positionnée dans des rainures en regard ménagées dans l'arbre et dans le moyeu assure un entraînement positif du moyeu (et du mobile qui lui est fixé) par l'arbre.

Par le document FR-A-2 490 753 on connait un moyeu amovible pour le montage d'un organe tournant sur un arbre d'entraînement, qui comprend un élément de moyeu présentant une fente radiale et des vis de serrage destinées à serrer le dit élément de moyeu sur le dit arbre. L'élément de moyeu présente, pour sa fixation, une partie conique coopérant avec une bague conique. Par les documents DE-A-3 623 024 et DE-A-3 938 445 sont connus des moyeux amovible du type décrit dans le préambule de la revendication 1.

La présente invention a pour objet de supprimer le montage par clavetage, en assurant un serrage optimal du système transmettant le couple requis, ainsi que de rationaliser la gamme de moyeux et donc leur production et leur stockage.

Selon l'invention, le moyeu amovible pour le montage d'un organe tournant sur un arbre d'entraînement présente les caractéristiques de la revendication 1. Il est du type qui comprend au moins un élément de moyeu tronconique fendu radialement et des vis de serrage destinées à serrer le dit élément de moyeu sur le dit arbre, un élément intermédiaire placé entre l'arbre d'entraînement et l'élément de moyeu tronconique pour optimiser le serrage dudit élément de moyeu sur l'arbre.

Le dit élément intermédiaire étant constitué par une bague fendue radialement.

Avantageusement, l'organe tournant ou les éléments de moyeu présentent des vis de serrage supplémentaires, l'ensemble des vis de serrage optimisant ainsi le serrage du moyeu sur l'arbre d'entraînement.

Une forme complémentaire en relief entre la bague fendue et l'élément de moyeu tronconique peut assurer l'entraînement positif du système.

Eventuellement, les vis de serrage supplémentaires sont d'un diamètre différent de celui des autres vis de serrage.

Le moyeu comprend une partie de moyeu conique fendue prolongée par une partie rectiligne fendue de plus petit diamètre sur laquelle est montée une bague conique symétrique de la dite partie de moyeu conique par rapport à un plan vertical et maintenue au moyen d'une bague vissée sur une extrémité filetée de la partie rectiligne du moyeu.

Cette bague vissée peut être fendue radialement et pourvue d'un système de serrage permettant d'en faire varier le diamètre.

Le moyeu peut coopérer avec un organe tournant dont la paroi intérieure présente une forme de double cône symétrique par rapport à un plan vertical médian en permettant le montage du moyeu amovible de chacun des deux côtés de l'organe tournant.

Pour la fixation du moyeu amovible à l'organe tournant lors du montage du moyeu d'un côté de l'organe tournant, la partie conique de l'organe tournant située de ce côté comprend deux demi-trous taraudés répartis selon un angle de 190°, et elle comprend aussi un demi-trou borgne, disposé selon un angle de 95° avec chacun des dits demi-trous taraudés et servant à l'extraction du moyeu amovible.

De même, pour la fixation du moyeu lorsqu'il est présenté de l'autre côté de l'organe tournant, la partie conique située de cet autre côté comprend aussi deux demi-trous taraudés répartis selon un angle de 190°, ainsi qu'un demi-trou borgne servant à l'extraction du moyeu amovible et disposé selon un angle de 95° avec chacun des dits demi-trous taraudés.

Pour bien faire comprendre l'invention on en décrira ci-après, à titre d'exemple sans caractère limitatif, une forme d'exécution préférée en référence au dessin schématique annexé dans lequel :
la figure 1 est une vue de face d'une poulie amovible selon l'invention permettant le montage d'un moyeu amovible indifféremment d'un côté ou de l'autre ;
la figure 2 est une coupe verticale prise selon la ligne II-II de la figure 1 ;
la figure 3 est une demi-vue en coupe verticale d'un moyeu amovible et d'une bague fendue utilisables avec la poulie des figures 1 et 2 ; et
la figure 4 est une vue éclatée du dispositif de moyeu amovible et de bague fendue selon l'invention pour le montage d'une poulie sur un arbre.

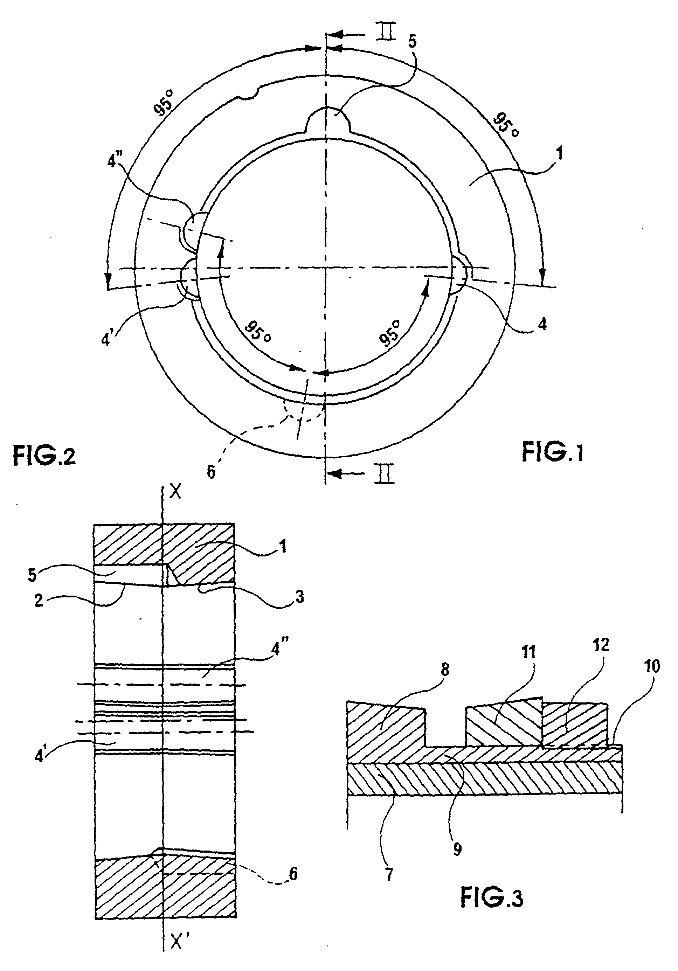

En référence aux figures 1 et 2, on a représenté une poulie 1 dont la paroi intérieure, dans la direction de la largeur de la poulie, présente la forme de deux cônes 2, 3 de pente 4° qui sont symétriques par rapport à l'axe vertical X, X' de la poulie.

Le cône 2 comporte deux demi-trous taraudés 4,4' répartis selon un angle de 190°, qui servent à la fixation d'un moyeu amovible (non représenté). Il comporte aussi un demi-trou borgne 5, qui sert à l'extraction du moyeu amovible et qui fait un angle de 95° avec chacun des demi-trous 4 et 4'.

Le cône 3 comporte deux demi-trous 4 et 4" taraudés, qui sont répartis selon un angle de 190° pour servir à la fixation d'un moyeu amovible. Il comprend aussi un demi-trou borgne 6, qui sert à l'extraction de ce moyeu amovible et qui fait un angle de 95° avec chacun des demi-trous 4 et 4".

On comprend que, selon l'accessibilité à la poulie 1, on peut monter sur celle-ci un moyeu amovible traditionnel présentant extérieurement une conicité de 4°, indifféremment du coté de la partie conique 2 ou de l'autre côté présentant la partie cônique symétrique 3. Dans le premier cas la fixation du moyeu sur la poulie s'effectue au moyen de vis vissées dans les demi-trous taraudés 4 et 4' du cône 2 et dans des demi-trous en regard présentés par le moyeu, alors que dans l'autre cas, la fixation du moyeu s'effectue par vissage dans les demi-trous taraudés 4 et 4" du cône 3 et dans les demi-trous en regard présentés par le moyeu.

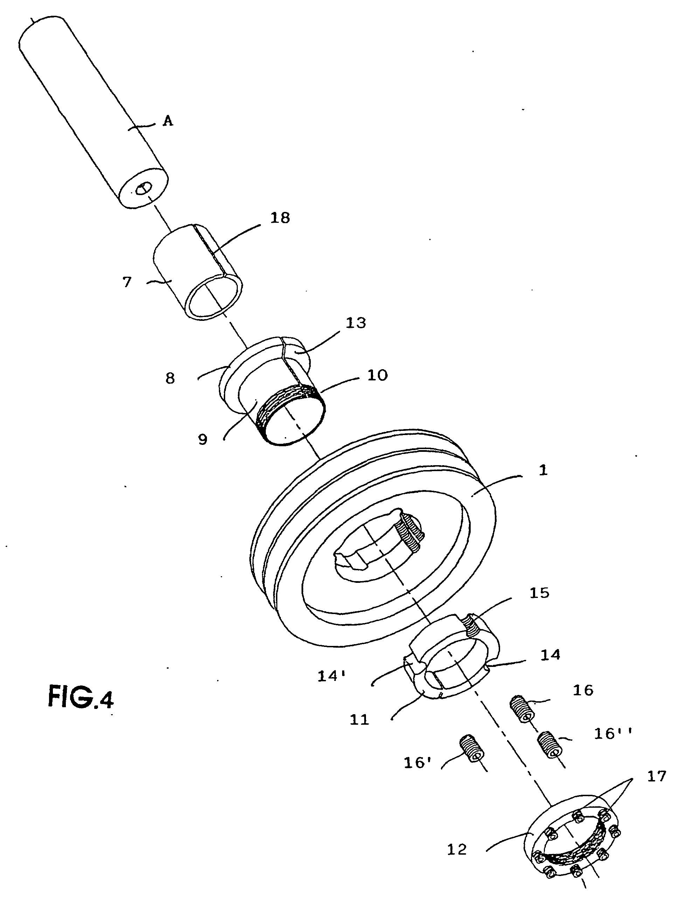

Sur la poulie selon l'invention est monté un moyeu amovible sans clavette tel que représenté aux figures 3 et 4. Le moyeu préalésé, à l'intérieur duquel s'ajuste une bague fendue 7, comporte une partie conique fendue 8 de plus grand diamètre, se poursuivant par une partie rectiligne fendue 9 de diamètre réduit et présentant à son extrémité un filetage 10. Sur la partie rectiligne 9 s'engage une bague fendue 11, d'une conicité symétrique de celle de la partie de moyeu 8 par rapport à un plan vertical, qui est maintenue en place par une bague 12 à filetage intérieur vissée sur la partie 10 du moyeu.

On comprend que ce moyeu peut être utilisé dans le sens représenté ou dans l'autre sens par rapport aux parties coniques 2 et 3 de l'organe tournant.

La présence de la bague fendue 7, qui peut être de matière différente de celle du moyeu, permet d'augmenter fortement l'adhérence sur l'arbre A par déformation de cette bague qui assure l'entrainement positif du moyeu par l'arbre en dispensant ainsi d'une clavette. Des fentes 18 pratiquées sur la moitié de la longueur de la bague 7 facilitent les déformations. Des bossages non représentés au dessin de la paroi. extérieure de la bague 7 peuvent coopérer avec des parties en creux du moyeu pour permettre un entraînement positif entre la bague 7 et le moyeu. La bague 7 permet de rationaliser la gamme de moyeux, et donc d'en simplifier la production et le stockage.

On notera que, avantageusement, la fente de la bague 7 peut être de la largeur de la rainure de clavette normalisée au diamètre de l'arbre A.

On remarque sur la figure 4 que la face 13 de la partie 8 du moyeu qui fait face à la bague 11 fait un angle obtus avec la partie rectiligne 9. Comme on le fait à la figure 4, la bague conique 11 comporte deux demi-trous 14,14' lisses destinés à venir en regard des demi-trous taraudés de la poulie 1. Elle comporte de plus un demi.-trou taraudé 15 qui vient en regard du demi-trou borgne de la poulie 1. Trois vis de démontage 16, 16', 16" s'introduisent dans les trous déterminés par les demi-trous 14, 14', 15 de la bague 11 et par les demi-trous en regard de la poulie 1.

La face inclinée 13 tend à appliquer les vis dans les demi-trous filetés de la poulie 1 en augmentant l'effort exercé sur la surface 13 au moment du démontage.

Les vis 17 portées par l'écrou 12 servent, lors du montage, à serrer la bague fendue 11 vers la partie conique 8 du moyeu.

On notera que la description ci-dessus a été donnée à titre d'exemple, sans caractère limitatif, et que des adjonctions ou des modifications constructives pourraient y être apportées sans sortir du cadre de l'invention tel que défini par les revendications.

## Revendications

1. Moyeu amovible pour le montage d'un organe tournant (1) sur un arbre d'entraînement (A), comprenant au-moins un élément de moyeu (8,9) présentant une fente radiale, des vis de serrage destinées à serrer ledit élément de moyeu sur ledit arbre, et une bague fendue (7) disposée entre ledit arbre (A) et l'élément de moyeu (8,9) pour optimiser le serrage de l'élément de moyeu sur l'arbre, **caractérisé en ce que** l'élément de moyeu comprend une partie de moyeu fendue (8) à face extérieure conique se poursuivant par une partie rectiligne fendue (9) de plus petit diamètre, une bague fendue (11) à face extérieure conique venant se serrer sur la partie rectiligne (9) de l'élément de moyeu sous l'action d'un écrou (12) dans une position symétrique de ladite face extérieure conique de la partie de moyeu (8) par rapport à un plan vertical.

## Patentansprüche

1. Lösbare Nabe für die Montage eines drehbaren Teils (1) auf einer Antriebswelle (A),
mit mindestens einem einen radialen Schlitz aufweisenden Nabenelement (8, 9),
mit Spannschrauben zum Festspannen des Nabenelements auf der Welle (A),
und mit einem geschlitzten Ring (7) zwischen der Welle (A) und dem Nabenelement (8, 9) zur Optimierung des Festspannens des Nabenelements auf der Welle,
**dadurch gekennzeichnet,**
daß das Nabenelement einen geschlitzten Teil (8) mit einer konischen Außenfläche aufweist, der sich in einem geradlinigen geschlitzten Teil (9) mit wesentlich geringerem Durchmesser fortsetzt,
und daß ein geschlitzter Ring (11) mit einer konischen Außenfläche unter der Wirkung einer Schraubenmutter (12) bzw. eines Schraubrings in Bezug zur Vertikalebene in eine symmetrische Stellung zur konischen Außenfläche des Nabenteils (8) auf den geradlinigen Teil (9) des Nabenelements bringbar ist.

## Claims

1. Detachable hub for mounting a rotating unit (1) on a drive shaft (A), comprising at least one hub member (8, 9) having a radial slot, fastening screws which are to fasten the hub member to the shaft, and a slotted ring (7) arranged between the shaft (A) and the hub member (8, 9) in order to optimise the fastening of the hub member to the shaft, **characterised in that** the hub member comprises a slotted hub portion (8) which has a conical outer face and which continues in a slotted rectilinear portion (9) of smaller diameter, a slotted ring (11) having a conical outer face being fastened to the rectilinear portion (9) of the hub member under the action of a nut (12) in a position symmetrical to the conical outer face of the hub portion (8) relative to a vertical plane.
